# EUROPÄISCHE PATENTSCHRIFT

(11) **EP 3 189 465 B1**
(45) Veröffentlichungstag und Bekanntmachung des Hinweises auf die Patenterteilung: **19.02.2020**
(21) Anmeldenummer: 15762526.0
(22) Anmeldetag: 01.09.2015
(51) Int. Cl.: G06F 21/73, H04L 9/32, G06Q 30/00

(54) **VERFAHREN UND AUTHENTIFIZIERUNGSSYSTEM ZUR REGISTRIERUNG EINES ZUFÄLLIGEN SICHERHEITSMERKMALS**
METHOD AND AUTHENTICATION SYSTEM FOR REGISTRATION OF A RANDOM SECURITY FEATURE
PROCÉDÉ ET SYSTÈME D'AUTHENTIFICATION DESTINÉ À L'ENREGISTREMENT D'UNE CARACTÉRISTIQUE DE SÉCURITÉ ALÉATOIRE

(30) Priorität: 01.09.2014 EP 14183070
(43) Veröffentlichungstag der Anmeldung: 12.07.2017
(73) Patentinhaber: Authentic Vision GmbH, 5020 Salzburg (AT)
(72) Erfinder: WEISS, Thomas, A-5020 Salzburg (AT); BERGMÜLLER, Thomas, A-5020 Salzburg (AT)
(74) Vertreter: Sonn & Partner Patentanwälte
(86) Internationale Anmeldenummer: PCT/EP2015/069893
(87) Internationale Veröffentlichungsnummer: WO 2016/034555

(56) Entgegenhaltungen:
- WO-A1-2014/059439
- US-A1- 2013 277 425
- SALOOMEH SHARIATI ET AL: "Security Analysis of Image-Based PUFs for Anti-counterfeiting", 3. September 2012 (2012-09-03), COMMUNICATIONS AND MULTIMEDIA SECURITY, SPRINGER BERLIN HEIDELBERG, BERLIN, HEIDELBERG, PAGE(S) 26 - 38, XP047016535, ISBN: 978-3-642-32804-6 Seite 3, Zeile 10 - Seite 6, Zeile 27 Seite 9, Zeile 19 - Seite 11, Zeile 3

## Beschreibung

Die Erfindung betrifft ein Verfahren zur Registrierung eines zufälligen Sicherheitsmerkmals eines Produkts in einer Datenbank anhand eines Identifikationsmerkmals des Produkts, wobei das zufällige Sicherheitsmerkmal mit dem Identifikationsmerkmal verknüpft wird und zur Authentifizierung eines Produkts, und ein Authentifizierungssystem zur Implementierung des Verfahrens mit einer Datenbank, welche Verknüpfungen zwischen Identifikationsmerkmalen und Sicherheitsmerkmalen von Produkten speichert, und mit einem mobilen Anwender-Lesegerät, welches eingerichtet ist, zur Authentifizierung und zur Registrierung eines Produkts ein Identifikationsmerkmal und ein zufälliges Sicherheitsmerkmal an dem Produkt zu erfassen.

Das gegenständliche Verfahren dient der Unterscheidung von Originalprodukten und Plagiaten, d.h. vom Urheber des Originalprodukts nicht autorisierten Kopien, und ist somit Teil eines umfassenderen Authentifizierungsverfahrens. In Verbindung mit derartigen Verfahren ist es im Stand der Technik hinlänglich bekannt, optisch erfassbare zufällige Objekteigenschaften des Produkts, welche von Objekt zu Objekt variieren und nicht oder nur schwer reproduzierbar sind, als Sicherheitsmerkmale zu verwenden. Alternativ oder zusätzlich können als Sicherheitsmerkmale auch nachträglich auf die Produkte aufgebrachte und nicht ablösbare zufällige Merkmale verwendet werden. Solche oder vergleichbare Sicherheitsmerkmale werden im Folgenden als zufällige Sicherheitsmerkmale bezeichnet, welche eine durch unautorisierte Dritte nicht oder nur sehr aufwendig reproduzierbare und somit nicht fälschbare Kennzeichnung von Produkten ermöglichen. Als Identifikationsmerkmal wird häufig eine Seriennummer verwendet, welche in der Regel im Zuge der Produktion generiert und auf das Produkt aufgebracht wird und somit im Allgemeinen - im Unterschied zu den zufälligen Sicherheitsmerkmalen - einerseits bereits vor Aufbringung bekannt und andererseits reproduzierbar ist. Das Identifikationsmerkmal ermöglicht eine eindeutige Identifikation eines bestimmten Produkts. Zur Vereinfachung der Authentifizierung kann das Identifikationsmerkmal in Form eines maschinenlesbaren Codes, z.B. als eindimensionaler oder zweidimensionaler Barcode vorliegen, wodurch ein automatisches Einlesen und Verarbeiten des Identifikationsmerkmals erheblich erleichtert wird. Bei der Überprüfung der Authentizität eines Produkts wird in der Regel das Identifikationsmerkmal und das Sicherheitsmerkmal erfasst und das erfasste Sicherheitsmerkmal mit einem in einer (beispielsweise zentralen bzw. zentral aktualisierbaren) Datenbank abgelegten und mit dem Identifikationsmerkmal verknüpften Sicherheitsmerkmal verglichen (bzw. werden genau genommen deren digitale Repräsentationen verglichen). Bei Übereinstimmung wird von der Authentizität des Produkts ausgegangen. Als Datenbank wird in der Regel eine elektronische bzw. computergestützte Datenbank verwendet, welche z.B. auf einem Datenbankserver betrieben wird.

Derartige Authentifizierungsverfahren sind beispielsweise der WO 2007/111548 A1, der GB 2460734 A oder der US 2004/0230528 A1 zu entnehmen. Wie bei den jeweiligen Verfahren die Registrierung der zufälligen Sicherheitsmerkmale in der Datenbank funktioniert, d.h. wie bzw. wann die entsprechenden Datenbankeinträge erstellt werden, wird jedoch im Stand der Technik - wenn überhaupt - nur am Rande erwähnt:
Lediglich die WO 2007/111548 A1 beschreibt ausdrücklich, dass die Materialeigenschaften vorab, z.B. vom Hersteller vor Auslieferung der Produkte, gemessen und in der Datenbank abgelegt werden; die GB 2460734 A erwähnt nur die grundsätzliche Möglichkeit, die Datenbank um neue Einträge zu erweitern, was jedoch - für sich alleine genommen - für eine Datenbank ohnehin selbstverständlich ist; und in der US 2004/0230528 A1 wird die Seriennummer auf Basis der Objektmerkmale generiert, sodass auch hier bereits bei der Herstellung (insbesondere vor der Aufbringung der Seriennummer) eine Verknüpfung zwischen Seriennummer und Objektmerkmalen hergestellt wird.

Die US 2013/277425 A1 betrifft die Absicherung einer Zulieferkette u.a. gegen Fälschungen durch Authentifikation der Ware an einem oder mehreren Punkten. Diese soll mit Markierungen mit einem eindeutigen Identifikationsmerkmal und einem zufälligen Sicherheitsmerkmal versehen werden, wobei die Markierung z.B. mittels Smartphone überprüft werden kann. Bei der Überprüfung wird das Sicherheitsmerkmal erfasst und zunächst festgestellt, ob es sich tatsächlich um ein 3D-Sicherheitsmerkmal handelt; anschließend wird gegebenenfalls durch Vergleich mit der Signatur eines Authentifikationsmusters, welches in einer zentralen Datenbank oder lokal am Artikel selbst hinterlegt ist, dessen Authentizität geprüft. Zum Hinterlegen der Signatur müssen die Markierungen bereits bei der Herstellung oder Auslieferung erfasst und "aktiviert" werden. Die Aktivierung geschieht somit unter der Kontrolle des Herstellers, d.h. in einem gesicherten Umfeld und unter vertrauenswürdigen Bedingungen. Die Authentizität der Ware bzw. der zu aktivierenden Markierung ist zu diesem Zeitpunkt durch die äußeren Umstände gewährleistet.

In Saloomeh Sharaiati et al., "Security Analysis of Image-Based PUFs for Anti-counterfeiting" (in: Communications and Multimedia Security, 13th IFIP TC 6/TC 11 International Conference. Herausgeber: De Decker et al. Springer Berlin Heidelberg, 2012, S. 26-38) wird ein formales analytisches Modell zur Bewertung der Sicherheit und Robustheit winziger Lasergravuren bzw. deren Konfiguration, Registrierung und Verifikation entwickelt. Dabei wird ausdrücklich von der Annahme ausgegangen, dass die Registrierung vom rechtmäßigen Besitzer durchgeführt wird und nur mit Komponenten aus vertrauenswürdigen Quellen. Unter solchen Bedingungen, d.h. in einer kontrollierten, rechtmäßigen Umgebung, ist die Authentizität der Ware bzw. der Markierung ebenfalls durch die äußeren Umstände gewährleistet.

Die WO 2014/059439 A1 betrifft ein System zur Registrierung von Produkten, bei denen ein verstecktes Sicherheitsmerkmal zur Authentisierung der Produkte verwendet wird. Die zur Authentisierung verwendeten Sicherheitsmerkmale werden am Computer generiert und bereits dabei, d.h. unter kontrollierten, vertrauenswürdigen Bedingungen, registriert.

Bei den bekannten Verfahren muss, weil die zufälligen Sicherheitsmerkmale naturgemäß nicht vorab bekannt sind, somit einer Erfassung der zufälligen Sicherheitsmerkmale beim Urheber bzw. Hersteller der Produkte erfolgen, damit in der Datenbank die für eine spätere Authentifizierung nötigen Verknüpfungen angelegt oder die implizit verknüpften Identifikationsmerkmale oder Signaturen auf die Produkte aufgebracht werden können. D.h. die Registrierung der zufälligen Sicherheitsmerkmale wird vom Urheber bzw. Hersteller der Produkte vorgenommen. Dementsprechend erfolgt die Registrierung (oder "Aktivierung") der zufälligen Sicherheitsmerkmale unter kontrollierten, gesicherten und somit vertrauenswürdigen Bedingungen. Unter solchen Bedinungen kann von der Authentizität der erst zu registrierenden Sicherheitsmerkmal ausgegangen werden. Die Erfassung der zufälligen Sicherheitsmerkmale beim Urheber bzw. Hersteller der Produkte ist jedoch in der Praxis nachteilig, da diese eine Anpassung der vorhandenen (Herstellungs-)Prozesse bedingt. So müssen beispielsweise zusätzliche Hochleistungskameras in die Produktionslinie eingetaktet, gegebenenfalls (um den Kameras genügen Zeit für die Erfassung der zufälligen Sicherheitsmerkmale zu geben) die Produktionsgeschwindigkeit gedrosselt oder sogar separate Produktionsschritte eingeführt werden.

Die US 2013/0277425 A1 zeigt ein Verfahren, bei dem am Herstellungs- oder Versandort eine Authentifizierungsinformation und eine Identifizierungsinformation aufgenommen und in einer vom Markeninhaber kontrollierten Datenbank gespeichert werden. Anschließend kann ein Produkt durch Vergleich der angebrachten Authentifizierungsinformation und der Identifizierungsinformation mit dem vorab angelegten Datenbankeintrag abgeglichen werden.

Die WO 2014/059439 A1 zeigt ein Verfahren, wobei aus einem Sicherheitsmerkmal Informationen, die in diesem enkodiert sind, ausgelesen werden und aufgrund der extrahierten Informationen entschieden wird, ob das Sicherheitsmerkmal authentisch ist.

Die Aufgabe der vorliegenden Erfindung besteht darin, die obigen Nachteile zu vermeiden und ein Verfahren und ein System vorzuschlagen, welche nötige Änderungen an bestehenden Produktionsprozessen bei der Einführen einer Produktauthentifizierung minimieren ohne jedoch auf die durch zufällige Sicherheitsmerkmale erzielte Fälschungssicherheit verzichten zu müssen.

Gelöst wird diese Aufgabe dadurch, dass eine vorläufige Authentizitätsprüfung des Produkts durchgeführt wird, wofür das Identifikationsmerkmal des Produkts ermittelt wird und in der Datenbank nach einem das Identifikationsmerkmal umfassenden Eintrag gesucht wird, und
- falls das ermittelte Identifikationsmerkmal (6) nicht mit einem zufälligen Sicherheitsmerkmal (8) verknüpft ist nach der vorläufigen Authentizitätsprüfung die Registrierung des zufälligen Sicherheitsmerkmals unter der Bedingung einer positiven vorläufigen Authentizitätsprüfung durchgeführt wird, wobei eine positive vorläufige Authentizitätsprüfung voraussetzt, dass ein das Identifikationsmerkmal umfassender Eintrag in der Datenbank gefunden wurde, (sodass etwaige nachfolgende endgültige Authentizitätsprüfungen des Produkts das registrierte Sicherheitsmerkmal verwenden können) oder
- falls das ermittelte Identifikationsmerkmal (6) gefunden wird und bereits mit einem zufälligen Sicherheitsmerkmal (8) verknüpft ist, eine endgültige Authentizitätsprüfung des Produkts (5) vorgenommen wird, wobei zur Feststellung der Authentizität das ermittelte zufällige Sicherheitsmerkmal (8) mit dem registrierten Sicherheitsmerkmal verglichen wird. D.h. die Registrierung des zufälligen Sicherheitsmerkmals, welche - wie eingangs angegeben - im Wesentlichen die Verknüpfung des zufälligen Sicherheitsmerkmals mit einem Identifikationsmerkmal umfasst, wird nur dann durchgeführt, wenn die vorläufige Authentizitätsprüfung die Authentizität des Produkts auf Basis der zu diesem Zeitpunkt zur Verfügung stehenden Informationen bestätigt. Wesentlich für die vorläufige Authentizitätsprüfung ist, dass sie - im Unterschied zur endgültigen Authentizitätsprüfung - ohne vorherige Registrierung des zufälligen Sicherheitsmerkmals funktioniert. Demgegenüber basiert die endgültige Authentizitätsprüfung auf einer Überprüfung der (bereits vorhandenen) Verknüpfung der am überprüften Produkt vorgefundenen Identifikations- und Sicherheitsmerkmale. Die Einführung einer vorläufigen Authentizitätsprüfung bedeutet naturgemäß eine Steigerung des für die Registrierung nötigen Aufwands und erscheint somit zunächst als nachteilig. Der entscheidende Vorteil ergibt sich jedoch aus der dadurch ermöglichten Auslagerung der Registrierung. Aufgrund der Absicherung der Registrierung durch die vorläufige Authentizitätsprüfung muss sie nicht mehr während der Herstellung erfolgen, sondern wird stattdessen nachträglich, vorzugsweise im Rahmen der ersten Authentifizierung des Produkts, durchgeführt. Mit der Registrierung kann aber auch die Erfassung der zufälligen Sicherheitsmerkmale ausgelagert werden, wodurch die Integration in den bestehenden Produktionsprozess erheblich vereinfacht wird, da kein Gerät zur Erfassung beim Urheber benötigt wird. Die Zuverlässigkeit und Sicherheit des Authentifizierungsverfahrens wird durch die Auslagerung nicht oder kaum beeinträchtigt, da die erste Authentifizierung in der Praxis immer durch den Händler und/oder Käufer des Originalprodukts (von dem später allenfalls Kopien angefertigt werden könnten) und in der Regel unter kontrollierten Bedingungen (z.B. direkt beim autorisierten Händler bzw. in dessen Vertriebskette) erfolgt und die vorläufige Authentizitätsprüfung unter diesen Umständen einen mehr als ausreichenden Schutz bietet. Spätere Authentifizierungen greifen ohnehin auf die dann bereits registrierten Sicherheitsmerkmale zurück und profitieren damit unabhängig von den äußeren Umständen von der vollen Fälschungssicherheit der zufälligen Sicherheitsmerkmale.

Dementsprechend wird die Aufgabe bei einem Authentifizierungssystem der eingangs angeführten Art dadurch gelöst, dass das mobile Lesegerät eingerichtet ist, eine vorläufige Authentizitätsprüfung des Produkts auf Basis des erfassten Identifikationsmerkmals auszuführen bzw. zu veranlassen, wobei in der Datenbank nach einem das Identifikationsmerkmal umfassenden Eintrag gesucht wird, und danach bei positivem Ausgang der vorläufigen Authentizitätsprüfung, welcher voraussetzt, dass ein das Identifikationsmerkmal umfassender Eintrag in der Datenbank gefunden wurde,
- falls das ermittelte Identifikationsmerkmal (6) nicht mit einem zufälligen Sicherheitsmerkmal (8) verknüpft ist eine Registrierung des erfassten zufälligen Sicherheitsmerkmals in der Datenbank auszuführen bzw. zu veranlassen oder
- falls das ermittelte Identifikationsmerkmal (6) gefunden wird und bereits mit einem zufälligen Sicherheitsmerkmal (8) verknüpft ist, eine endgültige Authentizitätsprüfung des Produkts (5) vorgenommen wird, wobei zur Feststellung der Authentizität das ermittelte zufällige Sicherheitsmerkmal (8) mit dem registrierten Sicherheitsmerkmal verglichen wird.

Indem die vorläufige Authentizitätsprüfung negativ ausfällt, wenn das Identifikationsmerkmal nicht in der Datenbank registriert ist, wird eine einfache und zugleich wirksame vorläufige Authentizitätsprüfung erzielt. Die durch diese Art der Authentizitätsprüfung erzielte Sicherheit beruht auf der Einzigartigkeit des Identifikationsmerkmals sowie dessen Eigenschaft, dass es von einem Fälscher nicht erraten werden kann. Derartige Identifikationsmerkmale können beispielsweise mit Hilfe eines Zufallsgenerators und/oder eines Verschlüsselungsverfahrens generiert werden. Dabei sollte die Anzahl der möglichen Merkmalskombinationen (d.h. die Länge einer Seriennummer bzw. allgemein der Informationsgehalt des Identifikationsmerkmals) weit über der Auflage des jeweiligen Produkts liegen, um einerseits die Einzigartigkeit zu garantieren und andererseits ein zufälliges Erraten eines gültigen (d.h. registrierten) Identifikationsmerkmals zu erschweren. Das auf diese Weise während der Herstellung generierte Identifikationsmerkmal wird einerseits auf ein Produkt aufgebracht und andererseits in der Datenbank registriert, jedoch ohne Verknüpfung mit einem - zu diesem Zeitpunkt noch nicht erfassten - zufälligen Sicherheitsmerkmal. Bei der vorläufigen Authentizitätsprüfung, z.B. während der ersten Authentifizierung, wird das am Produkt aufgebrachte Identifikationsmerkmal ermittelt und in der Datenbank nach einem entsprechenden Eintrag gesucht. Falls das ermittelte Identifikationsmerkmal nicht gefunden wird, handelt es sich bei dem Produkt offenbar um eine Fälschung und die Authentifizierung schlägt fehl und damit auch die Registrierung eines Sicherheitsmerkmals. Falls das ermittelte Identifikationsmerkmal gefunden wird und bereits mit einem zufälligen Sicherheitsmerkmal verknüpft ist, wird eine endgültige Authentizitätsprüfung vorgenommen. Ein potentieller Fälscher müsste daher ein Identifikationsmerkmal eines bereits produzierten aber noch nie authentifizierten Produkts erraten, d.h. zu den Eigenschaften des Identifikationsmerkmals selbst kommt als weitere Sicherheit noch das vergleichsweise enge Zeitfenster für die Registrierung des zufälligen Sicherheitsmerkmals (wobei das Zeitfenster - wie im Folgenden beschrieben - noch zusätzlich eingegrenzt werden kann). Bei der Registrierung des zufälligen Sicherheitsmerkmals wird demzufolge ein existierender Datenbankeintrag des Identifikationsmerkmals ergänzt; insbesondere wird kein neuer Datenbankeintrag für das Identifikationsmerkmal des Produkts angelegt. Die Registrierung des zufälligen Sicherheitsmerkmals ist demzufolge zeitlich gesehen erst nach der Registrierung des Identifikationsmerkmals möglich.

Darüber hinaus ist es vorteilhaft, wenn im Rahmen der vorläufigen Authentizitätsprüfung zusätzliche, mit dem Identifikationsmerkmal assoziierte Informationen, beispielsweise ein Zielmarkt und/oder ein Verkaufszeitraum des Produkts und/oder ein reproduzierbares Sicherheitsmerkmal, berücksichtigt werden, insbesondere in Verbindung mit dem zum Zeitpunkt der laufenden Registrierung aktuellen Zeitpunkt und Aufenthaltsort des Produkts. Solche assoziierten Informationen können beispielsweise mithilfe des Identifikationsmerkmals aus der Datenbank abgerufen werden, wo sie z.B. vom Hersteller während der Herstellung des Produkts und der Registrierung des Identifikationsmerkmals hinterlegt wurden, oder sie können direkt aus dem Identifikationsmerkmal abgeleitet werden, falls sie - z.B. in verschlüsselter Form - darin eingebettet sind. Anhand der zusätzlichen Informationen wird dann die Plausibilität einer ersten Authentifizierung des Produkts unter den ebenfalls bekannten Umständen (d.h. zu einem bekannten Zeitpunkt und gegebenenfalls einem bekannten Ort) ermittelt. Falls eine geringe Plausibilität ermittelt wird, z.B. weil der Ort der Registrierung vom Zielmarkt abweicht oder der Zeitpunkt der Registrierung signifikant außerhalb eines vorgesehenen Verkaufszeitraums liegt, schlägt die vorläufige Authentizitätsprüfung fehl und die Registrierung wird abgebrochen.

Die Sicherheit der vorläufigen Authentizitätsprüfung kann weiter verbessert werden, wenn im Rahmen der vorläufigen Authentizitätsprüfung die Plausibilität des zu registrierenden zufälligen Sicherheitsmerkmals, insbesondere in Abhängigkeit von einem mit dem Identifikationsmerkmal assoziierten Produkttyp oder einer Produktklasse, überprüft wird. Wenn alle möglichen zufälligen Sicherheitsmerkmale eines Typs oder einer Klasse eine gemeinsame Eigenschaft, wie beispielsweise die Zugehörigkeit zu einem Gesamtmuster (d.h. die Sicherheitsmerkmale weisen Teile bzw. Ausschnitten aus dem Gesamtmuster auf) oder ähnliche Mustereigenschaften aufweisen, können die erfassten (unregistrierten) zufälligen Sicherheitsmerkmale auf diese gemeinsame Eigenschaft überprüft werden. Zusätzlich können anhand des assoziierten Produkttyps oder der Produktklasse auch deren gemeinsame, z.B. strukturelle, Merkmale einer Plausibilitätsprüfung, welche einen Teil der vorläufigen Authentizitätsprüfung bildet, unterzogen werden.

Das vorliegende Verfahren zielt insbesondere darauf ab, dass das zu registrierende zufällige Sicherheitsmerkmal mithilfe eines mobilen Lesegeräts, vorzugsweise mithilfe eines Sensors eines handelsüblichen mobilen Endgeräts, wie beispielsweise eines handelsüblichen Smartphones, erfasst wird und das erfasste zufällige Sicherheitsmerkmal vor der Registrierung vom mobilen Lesegerät an die Datenbank übermittelt wird. Das zufällige Sicherheitsmerkmal kann z.B. ein mithilfe einer digitalen Kamera eines mobilen Endgeräts auslesbares zufälliges optisches Sicherheitsmerkmal sein. Bei einem derartigen Authentifizierungssystem, d.h. umfassend eine zentrale Datenbank und mehrere mit der Datenbank kommunizierende mobile Lesegeräte, kann eine zentrale Erfassung der Sicherheitsmerkmale vollständig entfallen. Als Lesegeräte werden bevorzugt ausschließlich bereits vorhandene bzw. weitverbreitete, handelsübliche Endgeräte eingesetzt, sodass keine Anschaffungskosten seitens des Herstellers oder Datenbankbetreibers entstehen. Indem das die Registrierung vornehmende mobile Lesegerät das erfasste zufällige Sicherheitsmerkmal (d.h. die digitale Repräsentation des physikalischen zufälligen Sicherheitsmerkmals) an die Datenbank übermittelt, können in der Folge andere mobile Lesegeräte auf das erfasste zufällige Sicherheitsmerkmal zugreifen oder die Datenbank kann es zu einem späteren Zeitpunkt mit einem von einem anderen mobilen Lesegerät übermittelten erfassten zufälligen Sicherheitsmerkmal vergleichen.

Aufgrund der weiten Verbreitung geeigneter optischer Sensoren und der steigenden Qualität und optischen Auflösung dieser Sensoren ist es besonders günstig, wenn das zu registrierende zufällige Sicherheitsmerkmal durch optisch erfassbare Eigenschaften gebildet ist und im Rahmen der Registrierung optisch erfasst wird. Optische Eigenschaften ermöglichen zudem eine hohe Informationsdichte und sind zugleich wirtschaftlich herstellbar (z.B. im Vergleich zu elektronischen Sicherheitsmerkmalen) und robust gegen mechanische oder thermische Beschädigungen oder Verfälschungen.

Um im Zusammenhang mit der Verwendung von mobilen Lesegeräten fehlerhafte Authentifizierungen (z.B. durch parallel genutzte andere mobile Lesegeräte) während der Durchführung des vorliegenden Verfahrens zu vermeiden, ist es günstig, wenn das erfasste zufällige Sicherheitsmerkmal (erst) nach der positiven vorläufigen Authentizitätsprüfung in die Datenbank eingetragen und mit dem Identifikationsmerkmal verknüpft wird. Die vorläufige Authentizitätsprüfung kann sowohl lokal am mobilen Lesegerät oder auch zentral in der Datenbank (z.B. am Datenbankserver) stattfinden. Wenn die vorläufige Authentizitätsprüfung am mobilen Lesegerät durchgeführt wird, kann das erfasste zufällige Sicherheitsmerkmal z.B. erst nach einer positiven vorläufigen Authentizitätsprüfung an die Datenbank übermittelt werden. Wenn die vorläufige Authentizitätsprüfung in der Datenbank bzw. von einem zentralen Server durchgeführt wird, kann z.B. das Identifikationsmerkmal und das erfasste zufällige Sicherheitsmerkmal zugleich an die Datenbank bzw. den Server übermittelt werden.

Bevorzugt wird die vorläufige Authentizitätsprüfung lokal am mobilen Lesegerät durchgeführt. Dadurch kann eine übermäßige Rechenbelastung des zentralen Servers durch möglicherweise aufwendige Vergleiche komplizierter und umfassender Sicherheitsmerkmale vermieden werden. Um dennoch eine höchstmögliche Sicherheit der vorläufigen Authentizitätsprüfung gegen Manipulationen zu gewährleisten, kann die vorläufige Authentizitätsprüfung auch als zweistufiges Verfahren, mit einer Überprüfung lokal am Lesegerät und - im Fall eines positiven Ausgangs - einer weiteren Überprüfung bzw. Kontrolle zentral am Server ausgeführt sein.

Die eingangs beschriebenen Vorteile des vorliegenden Verfahrens für die Vereinfachung und Beschleunigung eines Herstellungsprozesses können im vollen Umfang genutzt werden, wenn das Identifikationsmerkmal vorab, insbesondere während oder vor der Produktion des Produkts, generiert, auf das Produkt aufgebracht und in der Datenbank registriert wird. Wenn das Identifikationsmerkmal vor der Produktion generiert wird, kann es beispielsweise mit Hilfe eines Datenträgers der Produktion zur Verfügung gestellt werden. Eine Erfassung des Identifikationsmerkmals während der Herstellung ist somit für die Registrierung des Identifikationsmerkmals nicht erforderlich, da dieses bereits vor der Aufbringung auf das Produkt bekannt ist. Durch die Registrierung des Identifikationsmerkmals in der Datenbank während der Produktion kann das Identifikationsmerkmal als Komponente der vorläufigen Authentizitätsprüfung verwendet werden und es wird sichergestellt, dass nur Identifikationsmerkmale von tatsächlich produzierten Produkten in der Datenbank registriert sind. Damit wird das Zeitfenster, in dem das Identifikationsmerkmale erraten und eine Fälschung damit versehen werden könnte weiter eingegrenzt.

Weiters ist es günstig, wenn das Identifikationsmerkmal durch einen auf das Produkt aufgebrachten Identifikationscode wiedergegeben wird. Derartige Identifikationscodes können sehr günstig während oder bereits vor der Produktion der eigentlichen Produkte hergestellt und gegebenenfalls für verschiedenartigste Produkte verwendet werden. Der Identifikationscode kann beispielsweise mittels eines Klebeetiketts aufgeklebt oder bei geeigneten Produktoberflächen direkt aufgedruckt werden.

Der Identifikationscode kann besonders einfach, insbesondere auch automatisch, optisch eingelesen und verarbeitet werden, wenn der Identifikationscode das Identifikationsmerkmal in einem maschinenlesbaren Format kodiert aufweist, beispielsweise als eindimensionalen Strichcode oder als 2D-Code. Derartiger Codes können mit handelsüblichen und weit verbreiteten optischen Sensoren verarbeitet werden. Insbesondere können bei derartigen Codes - welche als solche ohne Weiteres erkannt und verwendet werden - zusätzliche Informationen und teilweise Instruktionen betreffend das Authentifizierungssystem integriert werden, sodass eine automatische Benutzerführung durch eine vorläufige und/oder endgültige Authentizitätsprüfung nach Erfassung und Erkennung des Identifikationscodes (wofür - wie gesagt - keine besonderen technischen Vorkehrungen nötig sind) erzielt werden kann.

Die vorliegende Erfindung wird anhand der folgenden Ausführungsbeispiele, auf die sie jedoch nicht beschränkt ist, und unter Bezugnahme auf die Zeichnungen noch weiter erläutert. Die Zeichnungen zeigen im Einzelnen:
Fig. 1 ein schematisches Verhaltensdiagramm eines Authentifizierungssystems und -verfahrens gemäß dem Stand der Technik; und
Fig. 2 ein schematisches Verhaltensdiagramm eines Authentifizierungssystems und -verfahrens gemäß der vorliegenden Erfindung.

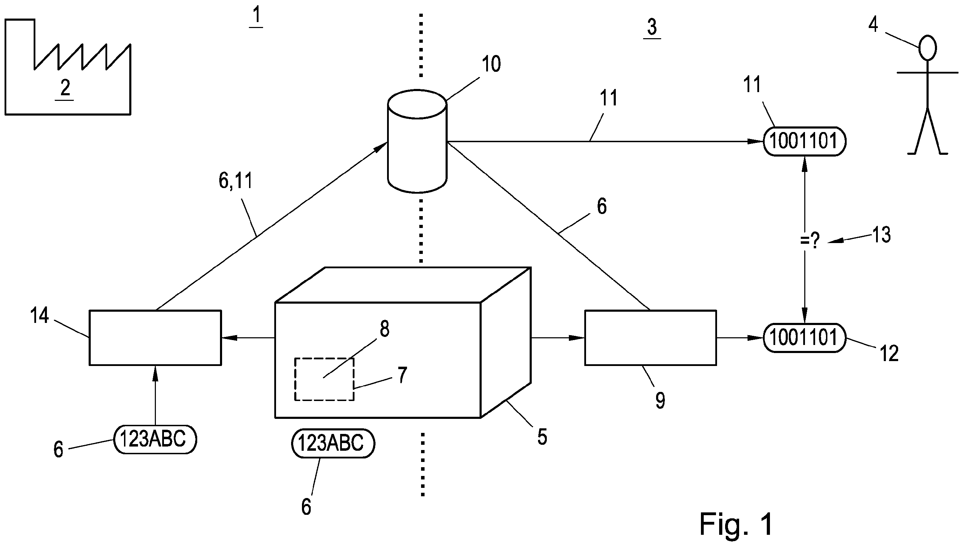

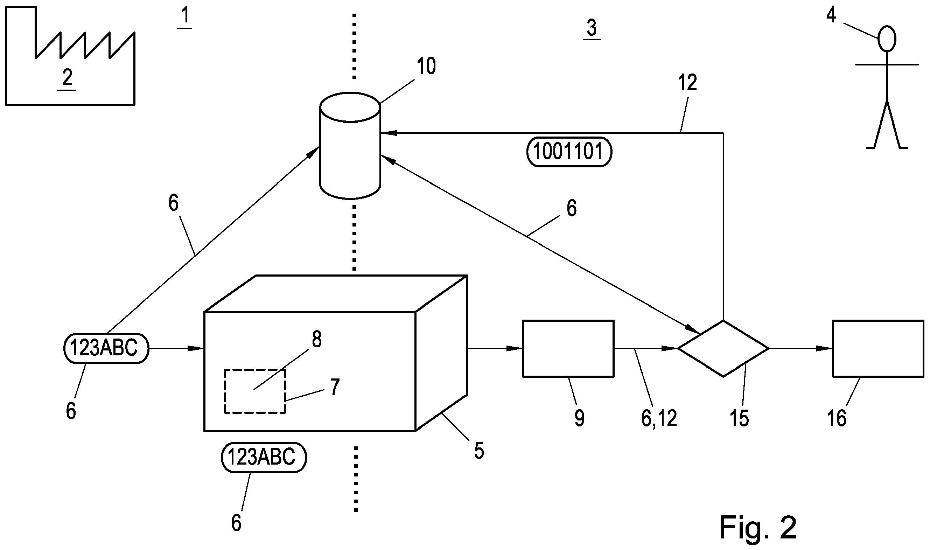

In den Diagrammen in Fig. 1 und 2 ist auf der linken Seite, der Herstellerseite 1 das Verhalten des Herstellers 2 und auf der rechten Seite, der Anwenderseite 3 das Verhalten des Anwenders 4 dargestellt. In beiden Fällen soll die Authentizität eines vom Hersteller 2 erzeugten Produktes 5 durch den Anwender 4 überprüfbar sein bzw. überprüft werden können. Das Produkt 5 ist hierfür mit einem Identifikationsmerkmal 6 in Form einer Seriennummer oder eines ID-Codes versehen und weist in einem Bereich 7 seiner Oberfläche zufällige Sicherheitsmerkmale 8 (z.B. zufällig angeordnete Materialteile, zufällig aufgebrachte Färbungen, eine zufällige Materialstruktur, zufällige Ausschnitte aus einer Hologrammfolie, etc.) auf. Die zufälligen Sicherheitsmerkmale 8 sind mittels eines Anwender-Lesegeräts 9 des Anwenders 4 optisch erfassbar. Abgesehen von den Merkmalen am Produkt 5 selbst, d.h. zumindest dem Identifikationsmerkmal 6 und dem zufälligen Sicherheitsmerkmal 8, können vom Hersteller 2 zusätzlich über eine vom Produkt 5 unabhängige zentrale Datenbank 10 Informationen an den Anwender 4 übermittelt werden.

Die endgültige Authentizitätsprüfung des Produkts 5 kann durch Wiedererkennung der spezifischen Merkmale, d.h. zumindest des Identifikationsmerkmals 6 und des zufälligen Sicherheitsmerkmals 8, durchgeführt werden. Hierfür wird ein in der Datenbank 10 gespeichertes digitales Abbild 11 der Sicherheitsmerkmale 8 mit einem digitalen Abbild 12 der physisch vorhandenen Sicherheitsmerkmale 8 verglichen 13. Im dargestellten Anwendungsfall werden die Merkmale des Produkts 5 durch optisch erfassbare Eigenschaften gebildet. Ein bekanntes Beispiel hierfür ist die Überprüfung von Fingerabdrücken. Der Prozess der Speicherung der Sicherheitsmerkmale 8 (bzw. deren Abbild 11) wird als Registrierung sowie der Prozess des späteren Vergleichs 13 als Authentifizierung bezeichnet. Im Stand der Technik (Fig. 1) werden die Sicherheitsmerkmale 8 digitalisiert und in Verbindung mit dem Identifikationsmerkmal 6 in einer Datenbank abgelegt und somit registriert. Dafür wird seitens des Herstellers 2 ein Hersteller-Lesegerät 14 benötigt, welches die Erfassung und Digitalisierung der Sicherheitsmerkmale 8 vornimmt. Zur Registrierung wird das digitale Abbild 11 vom Hersteller-Lesegerät 14 zusammen mit dem Identifikationsmerkmal 6 an die Datenbank 10 übermittelt und dort abgespeichert, wobei das digitale Abbild 11 des Sicherheitsmerkmals 8 mit dem Identifikationsmerkmal 6 verknüpft wird. Zur Authentifizierung wird seitens des Anwenders 4 das Identifikationsmerkmal 6, z.B. mittels eines Anwender-Lesegeräts 9 erfasst und eine Abfrage mit dem Identifikationsmerkmal 6 an die Datenbank 10 übermittelt. Falls eine entsprechende Kombination registriert ist, beantwortet die Datenbank 10 die Abfrage unter Angabe des registrierten und mit dem erhaltenen Identifikationsmerkmal 6 verknüpften digitalen Abbilds 11 des Sicherheitsmerkmals 8. Dieses wird mit dem von dem Anwender-Lesegerät 9 angefertigten digitalen Abbild 12 des am Produkt 5 vorgefundenen Sicherheitsmerkmals 8 verglichen 13 um die Authentizität des Produkts 5 festzustellen. Bei dem in Fig. 1 dargestellten Verfahren ist somit für die Registrierung des Sicherheitsmerkmals 8, d.h. für die Ablegung eines digitalen Abbilds 11 des Sicherheitsmerkmals 8 und die Verknüpfung mit dem Identifikationsmerkmal 6, ein seitens des Herstellers 2 Hersteller-Lesegerät 14 erforderlich. Die für die Registrierung nötigen Schritte müssen in den Produktionsprozess integriert werden bzw. jedenfalls vom Hersteller durchgeführt werden und verursachen somit zusätzliche Kosten für jedes hergestellte Produkt.

Das in Fig. 2 gezeigte erfindungsgemäße Verfahren und System kommt demgegenüber ohne eine Hersteller-Lesegerät 14 aus. Hier wird seitens des Herstellers 2 nur das - generierte und somit ohnehin bekannte - Identifikationsmerkmal 6, gegebenenfalls mit Zusatzinformationen betreffend den Zielmarkt, Verkaufszeitraum, Produkttyp oder die Produktklasse, an die Datenbank 10 übermittelt und dort abgelegt. Die Registrierung des Sicherheitsmerkmals 8 findet stattdessen auf der Anwenderseite 3 statt. Im gezeigten Fall wird die Registrierung während der ersten Authentifizierung durchgeführt. Dabei wird anstelle einer endgültigen Authentizitätsprüfung mit dem Vergleich 13 der digitalen Abbilder 11, 12 eine vorläufige Authentizitätsprüfung 15 durchgeführt. Dabei wird mittels des Anwender-Lesegeräts 9 das digitale Abbild 12 des Sicherheitsmerkmals 8 und das Identifikationsmerkmal 6 des Produkts 5 erfasst und der vorläufigen Authentizitätsprüfung 15 zugeführt. Anhand des Identifikationsmerkmals 6 werden anschließend etwaige dort gespeicherte Zusatzinformationen für die vorläufige Authentizitätsprüfung 15 aus der Datenbank 10 abgefragt. Falls das Identifikationsmerkmal 6 in der Datenbank 10 nicht registriert ist, ist es - und damit auch das Produkt 5 - offenbar nicht authentisch und die vorläufige Authentizitätsprüfung 15 liefert ein negatives Ergebnis, d.h. das Produkt 5 ist eine Fälschung 16. Andernfalls, d.h. wenn das Identifikationsmerkmal 6 registriert ist, wird optional anhand der von der Datenbank 10 erhaltenen Zusatzinformationen eine Plausibilitätsprüfung vorgenommen. Wenn diese positiv ausgeht, liefert die vorläufige Authentizitätsprüfung 15 insgesamt ein positives Ergebnis und es wird angenommen, dass das Produkt 5 ein Originalprodukt ist. Ausgehend von dieser Erkenntnis wird anschließend das Sicherheitsmerkmal 8 bzw. dessen digitales Abbild 12 an die Datenbank 10 übermittelt und dort registriert. Die Datenbank 10 speichert das vom Anwender-Lesegerät 9 erfasste digitale Abbild 12 ab und verknüpft es mit dem zuvor übermittelten Identifikationsmerkmal 6. Bei nachfolgenden Authentifizierungen desselben Produkts 5 kann dementsprechend eine endgültige Authentizitätsprüfung wie in Fig. 1 gezeigt anhand der registrierten Merkmale 6, 12 vorgenommen werden.

Die seitens des Anwenders durchzuführenden Schritte zur Registrierung können daher allgemein folgendermaßen zusammengefasst werden, wobei die Reihenfolge der Schritte auch abweichen kann:
a) Ermitteln eines zufälligen Sicherheitsmerkmals des Produkts;
b) Ermitteln eines Identifikationsmerkmals des Produkts;
c) Abfragen eines das Identifikationsmerkmal umfassenden Datensatzes einer Datenbank;
d) Falls ein entsprechender Datensatz gefunden wurde und dieser unvollständig ist, Durchführung einer vorläufigen Authentizitätsprüfung auf Basis des Identifikationsmerkmals und/oder zusätzlicher, damit verknüpfter Informationen
e) Falls die vorläufige Authentizitätsprüfung ein positives Ergebnis liefert, Registrierung des zufälligen Sicherheitsmerkmals und Verknüpfung mit dem Datensatz bzw. dem Identifikationsmerkmal.

Falls in Schritt c) kein Datensatz gefunden wurde oder in Schritt e) die vorläufige Authentizitätsprüfung ein negatives Ergebnis liefert, wird die Registrierung abgebrochen und das Produkt als Fälschung angenommen. Falls in Schritt d) der Datensatz vollständig ist, d.h. bereits ein registriertes Sicherheitsmerkmal umfasst, wird eine endgültige Authentizitätsprüfung durchgeführt, wobei zur Feststellung der Authentizität das in Schritt a) ermittelte Sicherheitsmerkmal mit dem registrierten Sicherheitsmerkmal verglichen wird.

## Patentansprüche

1. Verfahren zur Authentifizierung eines Produkts (5) und zur Registrierung eines zufälligen Sicherheitsmerkmals (8) des Produkts (5) in einer Datenbank (10) anhand eines reproduzierbaren Identifikationsmerkmals (6) des Produkts (5), wobei zur Registrierung das zufällige Sicherheitsmerkmal (8) mit dem Identifikationsmerkmal (6) verknüpft wird, das Verfahren umfassend die Schritte, dass eine vorläufige Authentizitätsprüfung (15) des Produkts (5) durchgeführt wird, wofür das Identifikationsmerkmal (6) des Produkts (5) ermittelt wird und in der Datenbank (10) nach einem das Identifikationsmerkmal umfassenden Eintrag gesucht wird, und
dass, falls das ermittelte Identifikationsmerkmal (6) nicht mit einem zufälligen Sicherheitsmerkmal (8) verknüpft ist, nach der vorläufigen Authentizitätsprüfung (15) die Registrierung des zufälligen Sicherheitsmerkmals (8) unter der Bedingung einer positiven vorläufigen Authentizitätsprüfung (15) durchgeführt wird, wobei eine positive vorläufige Authentizitätsprüfung (15) voraussetzt, dass ein das Identifikationsmerkmal umfassender Eintrag in der Datenbank (10) gefunden wurde, und
dass, falls das ermittelte Identifikationsmerkmal (6) gefunden wird und bereits mit einem zufälligen Sicherheitsmerkmal (8) verknüpft ist, eine endgültige Authentizitätsprüfung des Produkts (5) vorgenommen wird, wobei zur Feststellung der Authentizität das ermittelte zufällige Sicherheitsmerkmal (8) mit dem registrierten Sicherheitsmerkmal verglichen wird.

2. Verfahren nach Anspruch 1, **dadurch gekennzeichnet, dass** im Rahmen der vorläufigen Authentizitätsprüfung (15) zusätzliche, mit dem Identifikationsmerkmal (6) assoziierte Informationen, beispielsweise ein Zielmarkt und/oder ein Verkaufszeitraum des Produkts (5) und/oder ein reproduzierbares Sicherheitsmerkmal, berücksichtigt werden, insbesondere in Verbindung mit dem während der laufenden Registrierung aktuellen Zeitpunkt und Aufenthaltsort des Produkts (5).

3. Verfahren nach Anspruch 1 oder 2, **dadurch gekennzeichnet, dass** im Rahmen der vorläufigen Authentizitätsprüfung (15) die Plausibilität des zu registrierenden zufälligen Sicherheitsmerkmals (8), insbesondere in Abhängigkeit von einem mit dem Identifikationsmerkmal (6) assoziierten Produkttyp oder einer Produktklasse, überprüft wird.

4. Verfahren nach einem der Ansprüche 1 bis 3, **dadurch gekennzeichnet, dass** das zu registrierende zufällige Sicherheitsmerkmal (8) mithilfe eines mobilen Anwender-Lesegeräts (9), vorzugsweise mithilfe eines Sensors eines handelsüblichen mobilen Endgeräts wie beispielsweise eines handelsüblichen Smartphones, eines Tablet-PCs oder eines mobilen PCs, erfasst wird und das erfasste zufällige Sicherheitsmerkmal (8) vor der Registrierung vom mobilen Anwender-Lesegerät (9) an die Datenbank (10) übermittelt wird.

5. Verfahren nach einem der Ansprüche 1 bis 4, **dadurch gekennzeichnet, dass** das zu registrierende zufällige Sicherheitsmerkmal (8) durch optisch erfassbare Eigenschaften gebildet ist und im Rahmen der Registrierung optisch erfasst wird.

6. Verfahren nach Anspruch 4 oder 5, **dadurch gekennzeichnet, dass** das erfasste zufällige Sicherheitsmerkmal (8) nach der positiven vorläufigen Authentizitätsprüfung (15) in die Datenbank (10) eingetragen und mit dem Identifikationsmerkmal (6) verknüpft wird.

7. Verfahren nach einem der Ansprüche 4 bis 6, **dadurch gekennzeichnet, dass** die vorläufige Authentizitätsprüfung (15) lokal am mobilen Anwender-Lesegerät (9) durchgeführt wird.

8. Verfahren nach einem der Ansprüche 1 bis 7, **dadurch gekennzeichnet, dass** das Identifikationsmerkmal (6) vorab, insbesondere während der Produktion des Produkts (5), generiert, auf das Produkt (5) aufgebracht und in der Datenbank (10) registriert wird.

9. Authentifizierungssystem mit einer Datenbank (10), welche Verknüpfungen zwischen Identifikationsmerkmalen (6) und Sicherheitsmerkmalen (8) von Produkten (5) speichert, und mit einem mobilen Anwender-Lesegerät (9), welches eingerichtet ist, zur Authentifizierung und zur Registerierung eines Produkts (5) ein Identifikationsmerkmal (6) und ein zufälliges Sicherheitsmerkmal (8) an dem Produkt (5) zu erfassen, **dadurch gekennzeichnet, dass** das mobile Anwender-Lesegerät (9) eingerichtet ist, eine vorläufige Authentizitätsprüfung (15) des Produkts (5) auf Basis des erfassten Identifikationsmerkmals (6) auszuführen bzw. zu veranlassen, wobei in der Datenbank (10) nach einem das Identifikationsmerkmal umfassenden Eintrag gesucht wird, und danach bei positivem Ausgang der vorläufigen Authentizitätsprüfung (15), welcher voraussetzt, dass ein das Identifikationsmerkmal umfassender Eintrag in der Datenbank (10) gefunden wurde,
falls das ermittelte Identifikationsmerkmal (6) nicht mit einem zufälligen Sicherheitsmerkmal (8) verknüpft ist, eine Registrierung des erfassten zufälligen Sicherheitsmerkmals (8) in der Datenbank (10) auszuführen bzw. zu veranlassen, und
falls das ermittelte Identifikationsmerkmal (6) gefunden wird und bereits mit einem zufälligen Sicherheitsmerkmal (8) verknüpft ist, eine endgültige Authentizitätsprüfung des Produkts (5) vorgenommen wird, wobei zur Feststellung der Authentizität das ermittelte zufällige Sicherheitsmerkmal (8) mit dem registrierten Sicherheitsmerkmal verglichen wird.

10. Authentifizierungssystem nach Anspruch 9, **dadurch gekennzeichnet, dass** das Identifikationsmerkmal (6) durch einen auf das Produkt (5) aufgebrachten Identifikationscode wiedergegeben wird.

11. Authentifizierungssystem nach Anspruch 10, **dadurch gekennzeichnet, dass** der Identifikationscode das Identifikationsmerkmal in einem maschinenlesbaren Format kodiert aufweist, beispielsweise als eindimensionalen Strichcode oder als 2D-Code.

## Claims

1. Method for authenticating a product (5) and for registering a random security feature (8) of the product (5) in a database (10) on the basis of a reproducible identification feature (6) of the product (5), wherein the random security feature (8) is linked to the identification feature (6) for registration purposes, the method comprising the steps of performing a preliminary authenticity check (15) of the product (5), for which the identification feature (6) of the product (5) is determined and the database (10) is searched for an entry comprising the identification feature, and, if the determined identification feature (6) is not linked to a random security feature (8), registering the random security feature (8) after the preliminary authenticity check (15) if the preliminary authenticity check (15) is positive, wherein a positive preliminary authenticity check (15) presupposes that an entry comprising the identification feature has been found in the database (10), and, if the determined identification feature (6) has been found and is already linked to a random security feature (8), carrying out a final authenticity check of the product (5), wherein the determined random security feature (8) is compared with the registered security feature to establish authenticity.

2. Method according to claim 1, **characterised in that**, as part of the preliminary authenticity check (15), additional information associated with the identification feature (6), for example a target market and/or a sales period of the product (5) and/or a reproducible security feature, is taken into account, in particular in connection with the current time and location of the product (5) during the ongoing registration.

3. Method according to either claim 1 or claim 2, **characterised in that**, as part of the preliminary authenticity check (15), the plausibility of the random security feature (8) to be registered is checked, in particular according to a product type or product class associated with the identification feature (6).

4. Method according to any of claims 1 to 3, **characterised in that** the random security feature (8) to be registered is detected using a mobile user reading device (9), preferably using a sensor of a commercially available mobile terminal such as a commercially available smartphone, a tablet PC or a mobile PC, and the detected random security feature (8) is transmitted from the mobile user reading device (9) to the database (10) prior to registration.

5. Method according to any of claims 1 to 4, **characterised in that** the random security feature (8) to be registered is formed by optically detectable properties and is optically detected during registration.

6. Method according to either claim 4 or claim 5, **characterised in that**, following the positive preliminary authenticity check (15), the detected random security feature (8) is entered in the database (10) and linked to the identification feature (6).

7. Method according to any of claims 4 to 6, **characterised in that** the preliminary authenticity check (15) is performed locally on the mobile user reading device (9).

8. Method according to any of claims 1 to 7, **characterised in that** the identification feature (6) is generated, applied to the product (5) and registered in the database (10) in advance, in particular when the product (5) is being produced.

9. Authentication system comprising a database (10) which stores links between identification features (6) and security features (8) of products (5), and comprising a mobile user reading device (9) which is designed to detect an identification feature (6) and a random security feature (8) on the product (5) in order to authenticate and register a product (5), **characterised in that** the mobile user reading device (9) is designed to perform or prompt a preliminary authenticity check (15) of the product (5) on the basis of the detected identification feature (6), the database (10) being searched for an entry comprising the identification feature, and, if the preliminary authenticity check (15) is positive, which presupposes that an entry comprising the identification feature has been found in the database (10), to then perform or prompt registration of the detected random security feature (8) in the database (10) if the determined identification feature (6) is not linked to a random security feature (8), and to carry out a final authenticity check of the product (5) if the determined identification feature (6) has been found and is already linked to a random security feature (8), the determined random security feature (8) being compared with the registered security feature to establish authenticity.

10. Authentication system according to claim 9, **characterised in that** the identification feature (6) is an identification code applied to the product (5).

11. Authentication system according to claim 10, **characterised in that** the identification code comprises the identification feature encoded in a machine-readable format, for example as a one-dimensional bar code or as a 2D code.

## Revendications

1. Procédé d'authentification d'un produit (5) et d'enregistrement d'une caractéristique de sécurité (8) aléatoire du produit (5) dans une base de données (10) sur la base d'une caractéristique d'identification (6) reproductible du produit (5), la caractéristique de sécurité (8) aléatoire étant reliée à la caractéristique d'identification (6) pour enregistrement, ledit procédé comprenant les étapes d'exécution d'un contrôle d'authenticité (15) préliminaire du produit (5) pour lequel la caractéristique d'identification (6) du produit (5) est déterminée, et de recherche d'un enregistrement comprenant la caractéristique d'identification dans la base de données (10), et,
si la caractéristique d'identification (6) déterminée n'est pas reliée à une caractéristique de sécurité (8) aléatoire, d'exécution après le contrôle d'authenticité (15) préliminaire de l'enregistrement de la caractéristique de sécurité (8) aléatoire à la condition d'un contrôle d'authenticité (15) préliminaire positif, un contrôle d'authenticité (15) préliminaire positif supposant qu'un enregistrement comprenant la caractéristique d'identification ait été trouvé dans la base de données (10), et,
si la caractéristique d'identification (6) déterminée a été trouvée et est déjà reliée à une caractéristique de sécurité (8) aléatoire, d'exécution d'un contrôle d'authenticité final du produit (5), la caractéristique de sécurité (8) aléatoire déterminée étant comparée à la caractéristique de sécurité enregistrée pour le constat d'authenticité.

2. Procédé selon la revendication 1, **caractérisé en ce que** dans le cadre du contrôle d'authenticité (15) préliminaire, des informations complémentaires associées à la caractéristique d'identification (6), telles qu'un marché ciblé et/ou une période de vente du produit (5) et/ou une caractéristique de sécurité reproductible, sont prises en compte, en particulier en relation avec la date et le lieu de séjour actuels du produit (5) lors de l'enregistrement en cours.

3. Procédé selon la revendication 1 ou 2, **caractérisé en ce que**, dans le cadre du contrôle d'authenticité (15) préliminaire, la plausibilité de la caractéristique de sécurité (8) aléatoire à enregistrer est contrôlée, en particulier en fonction d'un type de produit ou d'une classe de produit associés à la caractéristique d'identification (6).

4. Procédé selon l'une des revendications 1 à 3, **caractérisé en ce que** la caractéristique de sécurité (8) aléatoire à enregistrer est saisie au moyen d'un lecteur mobile d'utilisateur (9), préférentiellement au moyen d'un capteur d'un terminal mobile du commerce tel qu'un smartphone du commerce, une tablette informatique ou un ordinateur portable, et **en ce que** la caractéristique de sécurité (8) aléatoire saisie est transmise à la base de données (10) avant enregistrement par le lecteur mobile d'utilisateur (9).

5. Procédé selon l'une des revendications 1 à 4, **caractérisé en ce que** la caractéristique de sécurité (8) aléatoire à enregistrer est constituée par des propriétés détectables optiquement et est saisie optiquement dans le cadre de l'enregistrement.

6. Procédé selon la revendication 4 ou 5, **caractérisé en ce que** la caractéristique de sécurité (8) aléatoire saisie est enregistrée dans la base de données (10) après contrôle d'authenticité (15) préliminaire positif et est reliée à la caractéristique d'identification (6) .

7. Procédé selon l'une des revendications 4 à 6, **caractérisé en ce que** le contrôle d'authenticité (15) préliminaire est effectué localement sur le lecteur mobile d'utilisateur (9).

8. Procédé selon l'une des revendications 1 à 7, **caractérisé en ce que** la caractéristique d'identification (6) est préalablement générée, en particulier pendant la fabrication du produit (5), est appliquée sur le produit (5) et est enregistrée dans la base de données (10).

9. Système d'authentification comprenant une base de données (10) mémorisant des liaisons entre des caractéristiques d'identification (6) et des caractéristiques de sécurité (8) de produits (5), et comprenant un lecteur mobile d'utilisateur (9), prévu pour saisir une caractéristique d'identification (6) et une caractéristique de sécurité (8) aléatoire sur le produit (5) pour l'authentification et l'enregistrement d'un produit (5), **caractérisé en ce que** le lecteur mobile d'utilisateur (9) est prévu pour effectuer ou déclencher un contrôle d'authenticité (15) préliminaire du produit (5) sur la base de la caractéristique d'identification (6) saisie, une recherche d'un enregistrement comprenant la caractéristique d'identification étant effectuée dans la base de données (10), puis, en cas d'issue positive du contrôle d'authenticité (15) préliminaire, supposant qu'un enregistrement comprenant la caractéristique d'identification a été trouvé dans la base de données (10),
si la caractéristique d'identification (6) déterminée n'est pas reliée à une caractéristique de sécurité (8) aléatoire, un enregistrement de la caractéristique de sécurité (8) saisie dans la base de données (10) est effectué ou déclenché, et,
si la caractéristique d'identification (6) déterminée a été trouvée et est déjà reliée à une caractéristique de sécurité (8) aléatoire, un contrôle d'authenticité final du produit (5) est effectué, la caractéristique de sécurité (8) aléatoire déterminée étant comparée à la caractéristique de sécurité enregistrée pour le constat d'authenticité.

10. Système d'authentification selon la revendication 9, **caractérisé en ce que** la caractéristique d'identification (6) est représentée sur un code d'identification appliqué sur le produit (5).

11. Système d'authentification selon la revendication 10, **caractérisé en ce que** le code d'identification présente la caractéristique d'identification codée sous un format lisible par machine, tel qu'un code à barres unidimensionnel ou un code 2D.
